# EUROPEAN PATENT APPLICATION

(11) **EP 4 257 656 A1**
(43) Date of publication of application: **11.10.2023**
(21) Application number: 23162318.2
(22) Date of filing: 16.03.2023
(51) Int. Cl.: C09K 5/10, H01M 10/6567

(54) **COOLANT COMPOSITION FOR ELECTRIC VEHICLES**

(30) Priority: 04.04.2022 JP 2022062565
(71) Applicant: CCI Corporation, Seki-shi, Gifu 501-3923 (JP); CCI Holdings Inc., Seki-shi, Gifu 501-3923 (JP)
(72) Inventor: Goto, Tomohiro, Seki-shi, Gifu, 501-3923 (JP); Morita, Tazusa, Seki-shi, Gifu, 501-3923 (JP)
(74) Representative: Grünecker Patent- und Rechtsanwälte PartG mbB

(57) **Abstract**

A coolant composition for electric vehicles contains a siloxane compound expressed by General Formula 1 below: 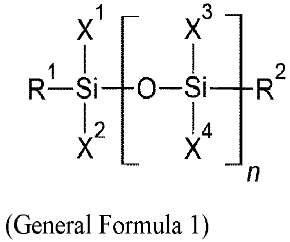 R¹ and R² are each identical to or different from each other, selected from the groups including C₁ to C₂₀ alkyl groups and amino groups as well as C₁ to C₂₀ alkylamino groups; X¹, X², X³, and X⁴ are each identical to or different from one another, selected from the groups including hydroxy groups, alkoxy groups, and alkyl groups; and n is 1 or greater but no greater than 500.

## Description

### Background

### Field of the Invention

The present invention relates to a coolant composition for electric vehicles.

### Description of the Related Art

Power units (primarily batteries, motors, etc.), advanced driving assistance systems and the like for electric vehicles require temperature control to maintain performance and prevent thermal runaway, and several cooling methods are being studied for this purpose. In particular, the water-cooling method has an advantage in that it achieves good thermal-exchange efficiency and thus facilitates temperature control. Traditionally, coolants for internal combustion engines contain ionic corrosion inhibitors added to prevent metal corrosion and are therefore high in electrical conductivity, which means that, if the vehicle experiences an accident or breakdown, the coolant may allow the electrical current in the power unit to pass through it to trigger a short circuit and cause a fire. Also, if the coolant is used to directly cool the battery, it must have high insulating property and antirust property.

Meanwhile, as described in Patent Literature 1, the art of adopting a coolant containing porous fine particles that can trap specific ions in order to discharge heat from a battery installed in an electric vehicle, is known.

### Background Art Literatures

Patent Literature 1: Japanese Patent Laid-open No. 2021-113242

### Summary

Coolants that contain ion-trapping porous fine particles in consideration of insulating property and antirust property are known, as described above.

An object of the present invention is to obtain a coolant composition for electric vehicles that offers, in particular, an antirust effect in addition to insulating property in order to cool power units and other devices requiring temperature control, or circuits in which a coolant is to be circulated.

To achieve the aforementioned object, the present invention is a coolant composition for electric vehicles as follows.
1. A coolant composition for electric vehicles containing a siloxane compound expressed by General Formula 1 below: 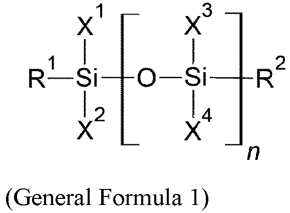
   R¹ and R² are each identical to or different from each other, selected from the groups including C₁ to C₂₀ alkyl groups and amino groups as well as C₁ to C₂₀ alkylamino groups.
   X¹, X², X³, and X⁴ are each identical to or different from one another, selected from the groups including hydroxy groups, alkoxy groups, and alkyl groups.
   n is 1 or greater but no greater than 500.
2. The coolant composition for electric vehicles according to 1, containing one or more types of antirust agents selected from inorganic acids, organic acids, triazoles, thiazoles, and amines.
3. The coolant composition for electric vehicles according to 1 or 2, whose base contains one or more types selected from water, glycols, alcohols, and glycol ethers.
4. The coolant composition for electric vehicles according to any one of 1 to 3, whose electrical conductivity is 500 µS/cm or lower.

According to the present invention, a coolant composition for electric vehicles offering excellent insulating property and antirust property before and after its use as a coolant composition for electric vehicles, can be obtained.

### Detailed Description of Embodiments

The present invention is described in specific detail below.

The present invention, as a coolant composition for electric vehicles, contains a specific siloxane compound.

Also, the coolant composition for electric vehicles according to the present invention has, before use, a pH of preferably 5.0 or higher, or more preferably 5.5 or higher, or yet more preferably 6.0 or higher. Meanwhile, the pH is preferably 12.0 or lower, or more preferably 11.0 or lower, or yet more preferably 10.5 or lower.

Also, the coolant composition for electric vehicles according to the present invention has, before use, an electrical conductivity of preferably 500.0 µS/cm or lower, or more preferably 300.0 µS/cm or lower, or yet more preferably 100.0 µS/cm or lower, or even more preferably 50.0 µS/cm or lower. Meanwhile, the electrical conductivity may be 10.0 µS/cm or higher, or 20.0 µS/cm or higher.

Further, when metal test pieces including those made of steel (50 × 25 × 1.6 mm, φ6.5 mm), aluminum casting (50 × 25 × 3 mm, φ6.5 mm), copper (50 × 25 × 1.6 mm, φ6.5 mm) and brass (50 × 25 × 1.6 mm, φ6.5 mm) are immersed in 750 ml of the coolant composition for electric vehicles according to the present invention, which is then heated to 88°C and kept in this state for 336 hours according to JIS K2234, the electrical conductivity of the time-tested coolant composition for electric vehicles according to the present invention is preferably 500.0 µS/cm or lower, or more preferably 300.0 µS/cm or lower, or yet more preferably 100.0 µS/cm or lower, or even more preferably 50.0 µS/cm or lower. Meanwhile, the electrical conductivity may be 10.0 µS/cm or higher, or 20.0 µS/cm or higher.

Alternatively, when the coolant composition for electric vehicles in which the metal test pieces made of steel, aluminum casting, copper, and brass are immersed is heated to 88°C and kept in this state for 336 hours, preferably the change in mass of each time-tested metal piece is ±0.10 mg/cm² or less for the steel, ±0.15 mg/cm² or less for the aluminum casting, ±0.10 mg/cm² or less for the copper, and ±0.10 mg/cm² or less for the brass.

### (Specific Siloxane Compound)

The specific siloxane compound in the present invention is a siloxane compound expressed by General Formula 1 below. Any such compound has low electrical conductivity: 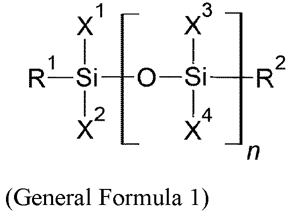
R¹ and R² are each identical to or different from each other, selected from the groups including C₁ to C₂₀ alkyl groups and amino groups as well as C₁ to C₂₀ alkylamino groups.
X¹, X², X³, and X⁴ are each identical to or different from one another, selected from the groups including hydroxy groups, alkoxy groups, and alkyl groups.
n is 1 or greater but no greater than 500.

In the coolant composition for electric vehicles according to the present invention, the siloxane compound expressed by General Formula 1 above is such that preferably at least one of R¹ and R² is a C₁ to C₂₀ alkyl group, or more preferably at least one of them is a C₁ to C₁₀ alkyl group, or yet more preferably at least one of them is a C₁ to C₅ alkyl group.

Also, preferably at least one of R¹ and R² is a -NH₂ group, or at least one of them is a C₁ to C₂₀ alkylamino group.

Preferably at least one of R¹ and R² is a -NH₂ group, or more preferably both R¹ and R² are a -NH₂ group, or yet more preferably at least one of R¹ and R² is a -NH₂ group and simultaneously the other is a methyl group.

It should be noted that, to the extent that doing so does not impair the effects of the present invention, a siloxane compound whose R¹ and R² are each identical to or different from each other and selected from methyl groups and hydrogen, may or may not be contained.

In the coolant composition for electric vehicles according to the present invention, when it contains no other additive relating to corrosion prevention, the total content of the siloxane compound expressed by General Formula 1 above is preferably 0.10% by weight or higher, or more preferably 0.15% by weight or higher, relative to the entire coolant composition for electric vehicles. Also, the content is preferably 5.00% by weight or lower, or more preferably 3.00% by weight or lower, or yet more preferably 1.00% by weight or lower, or most preferably 0.50% by weight or lower, or preferably to the maximum degree possible 0.40% by weight or lower.

Additionally, in the coolant composition for electric vehicles according to the present invention, when it contains corrosion inhibitors as described below, the total content of the siloxane compound expressed by General Formula 1 above is preferably 0.03% by weight or higher, or more preferably 0.05% by weight or higher, or yet more preferably 0.07% by weight or higher, relative to the entire coolant composition for electric vehicles. Also, the content is preferably 2.00% by weight or lower, or more preferably 0.50% by weight or lower, or yet more preferably 0.10% by weight or lower.

### (Base)

Ideally the base contained in the coolant composition for electric vehicles according to the present invention is low in electrical conductivity, and nonfreezing. To be specific, a base containing a mixture of two or more types selected from ion-exchanged water, pure water, water, glycols, alcohols, and glycol ethers, is preferred.

### (Glycols That May Be Contained in Base)

The aforementioned glycols include one or more types selected from ethylene glycol, propylene glycol, 1,3-propanediol, 1,3-butylene glycol, hexylene glycol, diethylene glycol, triethylene glycol, glycerin, etc., of which ethylene glycol or propylene glycol is particularly desired.

### (Alcohols That May Be Contained in Base)

The aforementioned alcohols include, for example, one or more types selected from methanol, ethanol, propanol, butanol, pentanol, hexanol, heptanol, and octanol.

### (Glycol Ethers That May Be Contained in Base)

The aforementioned glycol ethers include, for example, one or more types selected from ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

Of the aforementioned bases other than water, ethylene glycol and/or propylene glycol is/are preferred from the viewpoints of ease of handling, cost, and easy availability.

### (Corrosion Inhibitors)

Corrosion inhibitors may be added to the extent that doing so does not impair the effects of the present invention.

Also, at least one or more types of corrosion inhibitors may be contained in the composition according to the present invention, to the extent that doing so does not affect electrical conductivity, in order to effectively prevent the metals used in the power units of electric vehicles from corroding. If these corrosion inhibitors are contained, the total content of these corrosion inhibitors in the coolant composition for electric vehicles is preferably 1.50% by weight or lower, or more preferably 1.00% by weight or lower, or yet more preferably 0.80% by weight or lower.

Also, when these corrosion inhibitors are contained, the total content of the siloxane compound expressed by General Formula 1 and other corrosion inhibitors in the present invention is preferably 0.05% by weight or higher, or more preferably 0.10% by weight or higher. Meanwhile, the total content is preferably 0.20% by weight or lower, or more preferably 0.15% by weight or lower.

Furthermore, among the corrosion inhibitors mentioned below that can be used in the present invention together with the siloxane compound expressed by General Formula 1, selecting one or more types from, in particular, triazoles, phosphoric acids, aliphatic carboxylic acids and/or salts thereof, as well as amines, is preferred in that the effects can be demonstrated with a lesser quantity of antirust agents.

The corrosion inhibitors include mixtures containing any one, two, or more types selected from phosphoric acids and/or salts thereof, aliphatic carboxylic acids and/or salts thereof, aromatic carboxylic acids and/or salts thereof, triazoles, thiazoles, silicates, nitrates, nitrites, borates, tungstates, molybdates, and amine salts, as well as sulfur-containing alcohols, sulfur-containing phenols, and amines.

The phosphoric acids and/or salts thereof include orthophosphoric acid, pyrophosphoric acid, hexametaphosphoric acid, tripolyphosphoric acid, etc., as well as alkali metal salts, or preferably sodium salts and potassium salts, thereof.

The aliphatic carboxylic acids and/or salts thereof include 2-phosphonobutane-1,2,4-tricarboxylic acid, pentanoic acid, hexanoic acid, heptanoic acid, octanoic acid, nonanoic acid, decanoic acid, 2-ethylhexanoic acid, adipic acid, suberic acid, azelaic acid, sebacic acid, undecanoic acid, dodecanoic diacid, other dicarboxylic acids, etc., as well as alkali metal salts, or preferably sodium salts and potassium salts, thereof.

The aromatic carboxylic acids and/or salts thereof include benzoic acid, toluic acid, para-tert-butylbenzoic acid, phthalic acid, para-methoxybenzoic acid, cinnamic acid, etc., as well as alkali metal salts, or preferably sodium salts and potassium salts, thereof.

The triazoles include tolyltriazole, benzotriazole, and 4-phenyl-1,2,3-triazole.

The thiazoles include mercaptobenzothiazole as well as alkali metal salt, or preferably sodium salt and potassium salt, thereof.

The silicates include sodium salt and potassium salt of metasilicic acid, as well as aqueous solution of sodium silicate commonly known as "liquid glass" and expressed by Na₂O/XSiO₂ (X = 0.5 to 3.3), the nitrates include sodium nitrate and potassium nitrate, and the nitrites include sodium nitrite and potassium nitrite. The borates include sodium tetraborate and potassium tetraborate.

The molybdates include sodium molybdate, potassium molybdate, and ammonium molybdate, while the amine salts include monoethanolamine, diethanolamine, triethanolamine, monoisopropanolamine, diisopropanolamine, and triisopropanolamine.

The sulfur-containing alcohols and sulfur-containing phenols include ethylene oxide adducts of alkyl amines, ethylene oxide adducts of alkyl diamines, 2-(methylthio)ethanol, 2-(ethylthio)ethanol, 2-(n-propylthio)ethanol, 2-(isopropylthio)ethanol, 2-(n-butylthio)ethanol, 2-(isobutylthio)ethanol, 2-(phenylthio)ethanol, 2,2'-dithiodiethanol, 2-(2-aminoethylthio)ethanol, 3-(ethylthio)propanol, 4-(methylthio)butanol, 3-(methylthio)hexanol, 2-thiophenemethanol, 3-thiophenemethanol, 2-thiopheneethanol, 3-thiopheneethanol, 4-(methylthio)-6-(hydroxymethyl)-o-cresol, methionol, DL-methioninol, L-methioninol, thiodiglycol, 6-hydroxy-1,3-benzoxathiol-2-one, 4-(methylthio)benzyl alcohol, 4,4'-thiodiphenol, 3,6-dithia-1,8-octanediol, 3,7-dithia-1,9-nonanediol, etc.

The amines include triethanolamine, diethanolamine, ethanolamine, trimethylamine, hexamethylenediamine, etc.

### (Dye)

The coolant composition for electric vehicles according to the present invention may or may not contain a water-soluble dye. As for the water-soluble dyes that can be used, those offering excellent stability are preferred.

In the coolant composition for electric vehicles according to the present invention, the content of any water-soluble dye, if contained, is preferably 0.0005 to 0.2% by weight, or more preferably 0.001 to 0.1% by weight, or yet more preferably 0.003 to 0.02% by weight, relative to the base of the coolant composition for electric vehicles representing 100% by weight.

If the content is under 0.0005% by weight, visually confirming the coloring becomes difficult, resulting in poor visual recognizability of the coolant composition.

### (Defoaming Agent)

The coolant composition for electric vehicles according to the present invention may contain a defoaming agent.

For this defoaming agent, dimethyl siloxane or other siloxane-based defoaming agent may be adopted.

The content of such defoaming agent is preferably 0.001 to 1.0% by weight, or more preferably 0.005 to 0.1% by weight, in the coolant composition for electric vehicles.

It should be noted that the present invention is not limited to the following examples, and can be freely modified and implemented within the scope described in "What Is Claimed Is."

### (Other Additives)

Among other additives, a hydroxide of any normal alkaline material, or preferably sodium, potassium or other alkali metal salt, may be used to adjust the pH. The pH adjustment range is 6.5 to 9.0, or preferably the pH is adjusted within a range of 7.0 to 9.0. It should be noted that as described above, a defoaming agent may be added to the coolant composition for electric vehicles but cyclopentanes may not be contained.

Also, the coolant composition may or may not contain porous fine particles that can trap ions, non-silicone-based surfactant, mineral oil, and silica.

### Examples

The constituents and test results of the compositions used in the Examples and Comparative Examples are shown in Table 1 below.

### (Method for Testing Metal-Corroding Property)

Regarding their metal-corroding property, the coolant compositions for electric vehicles in the Examples and Comparative Examples shown in Table 1 were measured for pH and electrical conductivity prior to the test, as the initial pH and electrical conductivity.

Next, metal test pieces including those made of steel (50 × 25 × 1.6 mm, φ6.5 mm), aluminum casting (50 × 25 × 3 mm, φ6.5 mm), copper (50 × 25 × 1.6 mm, φ6.5 mm), and brass (50 × 25 × 1.6 mm, φ6.5 mm) (with each metal test piece, "φ6.5 mm" represents the diameter of the bolt hole provided in the plate) were each immersed in 750 ml of each coolant composition for electric vehicles, which was then heated to 88°C for 336 hours, and the test solution was measured for pH and electrical conductivity after the test.

Furthermore, the metal test pieces were visually examined for presence or absence of exterior discoloration or corrosion after the test. Also, a change in mass per surface area of each metal test piece before and after the test was obtained.

Table 1 shows the results of Examples 1 to 10 and Comparative Examples 1 and 2.

Respective groups in General Formula 1 representing the siloxane compounds used in the Examples and Comparative Examples:

Siloxane compound 1 : R¹, R² = NH₂, X¹, X², X³, X⁴ = OH, n = 1

Siloxane compound 2 : R¹ = NH₂, R² = CH₃, X¹, X², X³, X⁴ = OH, n = 1

Siloxane compound 3 : R¹ = NHCH₂CH₂NH₂, R² = CH₃, X¹, X², X³, X⁴ = OH, n = 1

Siloxane compound 4 : R¹, R² = NHCH₂CH₂NH₂, X¹, X², X³, X⁴ = OH, n= 1

### (Exterior after Test)

- O: : No discoloration is found.
- △: : Discoloration is found.
- ×: : Corrosion is found.

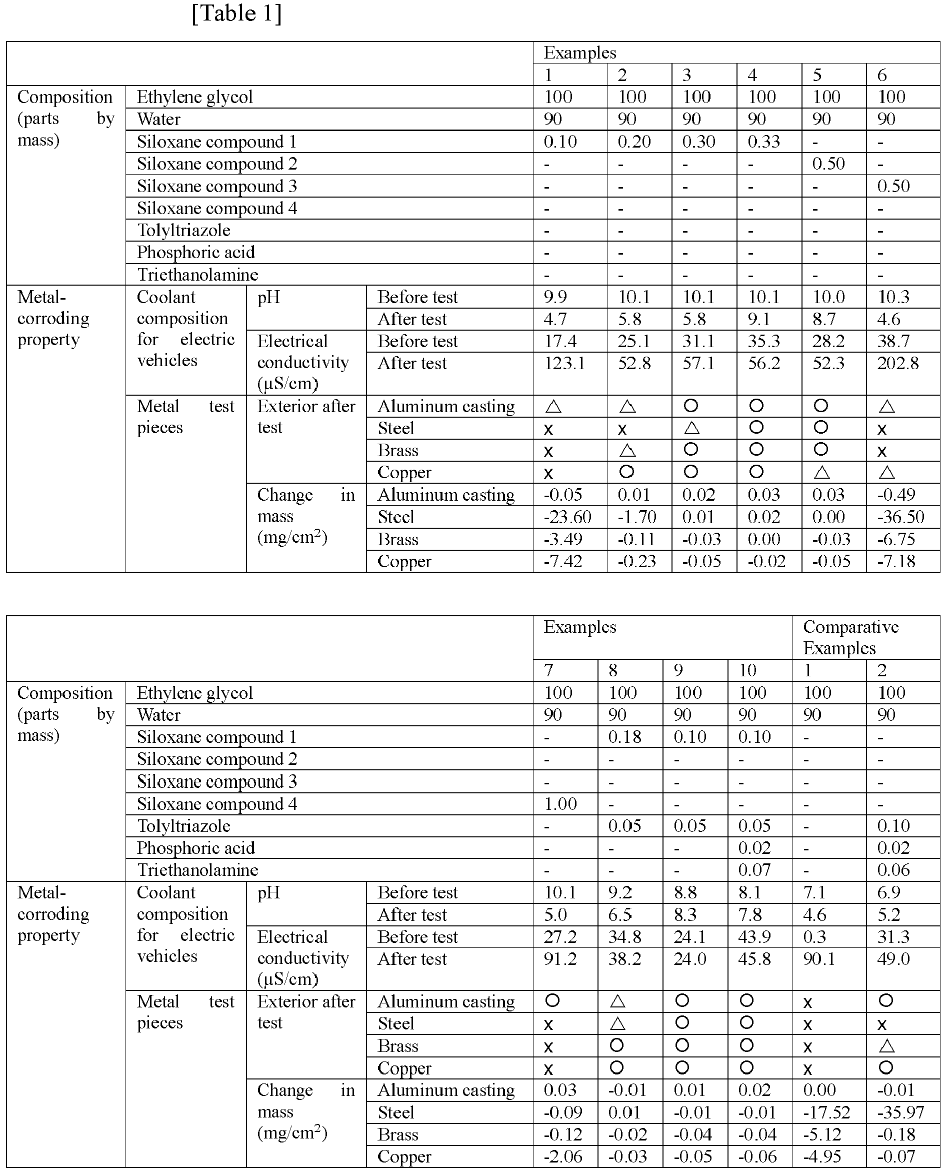

Based on the above results, Examples 1 to 7 conforming to the present invention achieved good metal corrosion inhibiting property, at least with respect to the aluminum casting, compared to Comparative Example 1 also containing none of tolyltriazole, phosphoric acid, and triethanolamine. They also allowed the change in pH to remain more stable, although the specific change varied depending on the blending quantity of siloxane compound.

Meanwhile, Examples 8 to 10 conforming to the present invention achieved good metal corrosion inhibiting property, at least with respect to the steel and brass, while keeping the change in mass small in the steel, brass, and copper, compared to Comparative Example 2 also containing tolyltriazole, phosphoric acid, and triethanolamine. Furthermore, they allowed the change in pH and electrical conductivity to remain more stable.

Judging from these results, the coolant composition for electric vehicles according to the present invention can maintain stable pH and electrical conductivity even after use. It is also shown that the coolant composition for electric vehicles according to the present invention does not corrode various metals.

## Claims

1. A coolant composition for electric vehicles containing a siloxane compound expressed by General Formula 1 below: 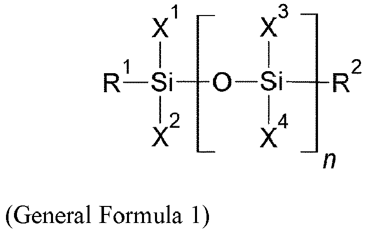
wherein R¹ and R² are each identical to or different from each other, selected from the groups including C₁ to C₂₀ alkyl groups and amino groups as well as C₁ to C₂₀ alkylamino groups;
X¹, X², X³, and X⁴ are each identical to or different from one another, selected from the groups including hydroxy groups, alkoxy groups, and alkyl groups; and
n is 1 or greater but no greater than 500.

2. The coolant composition for electric vehicles according to claim 1, containing one or more types of antirust agents selected from inorganic acids, organic acids, triazoles, thiazoles, and amines.

3. The coolant composition for electric vehicles according to claim 1 or 2, whose base contains one or more types selected from water, glycols, alcohols, and glycol ethers.

4. The coolant composition for electric vehicles according to any one of claims 1 to 3, whose electrical conductivity is 500 µS/cm or lower.
